# EUROPÄISCHE PATENTSCHRIFT

(11) **EP 4 411 495 B1**
(45) Veröffentlichungstag und Bekanntmachung des Hinweises auf die Patenterteilung: **05.08.2026**
(21) Anmeldenummer: 23154984.1
(22) Anmeldetag: 03.02.2023
(51) Int. Cl.: G05B 19/418

(54) **VERFAHREN ZUM DEZENTRALEN BETREIBEN EINER PRODUKTIONSANLAGE ZUM HERSTELLEN, FERTIGEN UND/ODER MONTIEREN VON PRODUKTEN UND/ODER GÜTERN SOWIE PRODUKTIONSANLAGE, DIE NACH EINEM DERARTIGEN VERFAHREN BETREIBBAR IST**
METHOD FOR DECENTRALIZED OPERATION OF A PRODUCTION PLANT FOR MANUFACTURING, PRODUCING AND/OR ASSEMBLING PRODUCTS AND/OR GOODS, AND PRODUCTION PLANT OPERABLE BY SUCH A METHOD
PROCÉDÉ D'EXPLOITATION DÉCENTRALISÉE D'UNE INSTALLATION DE PRODUCTION POUR LA FABRICATION, LA FINITION ET/OU L'ASSEMBLAGE DE PRODUITS ET/OU DE MARCHANDISES ET INSTALLATION DE PRODUCTION POUVANT ÊTRE EXPLOITÉE SELON UN TEL PROCÉDÉ

(43) Veröffentlichungstag der Anmeldung: 07.08.2024
(73) Patentinhaber: Schwäbische Werkzeugmaschinen GmbH, 78713 Schramberg-Waldmössingen (DE)
(72) Erfinder: Voigt, Nicholas, 78628 Rottweil (DE); Jacobsen, Hendrik, 50823 Köln (DE); Haag, Daniel, 78655 Dunningen (DE)
(74) Vertreter: Schorr, Peter Karl

(56) Entgegenhaltungen:
- EP-A1- 3 951 524
- EP-A1- 4 020 108
- EP-A1- 4 089 618
- WO-A1-2022/207107
- US-A1- 2009 043 404

## Beschreibung

Die Erfindung betrifft ein Verfahren zum dezentralen Betreiben einer Produktionsanlage zum Herstellen, Fertigen und/oder Montieren von Produkten und/oder Gütern, die in einem Produktionsumfeld mindestens drei Teilnehmer umfasst, wobei jeder Teilnehmer eine Recheneinheit, in der durch den jeweiligen Teilnehmer ein Fertigkeitsspektrum erfassbar ist, und wobei jeder Teilnehmer eine Sende- und Empfangseinheit zum Senden und Empfangen elektromagnetischer Wellen umfasst, mit den Schritten:
a. Übernahme eines mindestens eine Aufgabe umfassenden Produktionsauftrags aus einem Produktionssystem der Produktionsanlage durch einen Teilnehmer, der einen Produktions-Teilnehmer bildet;
b. Identifizieren einer außerhalb des Fertigkeitsspektrums liegenden Aufgabe der mindestens einen Aufgabe durch den Produktions-Teilnehmer und Senden der identifizierten Aufgabe an das Produktionsumfeld;
c. Empfangen der gesendeten Aufgabe durch mindestens einen weiteren Teilnehmer im Produktionsumfeld und Prüfen durch den weiteren Teilnehmer, ob das Ausführen der Aufgabe innerhalb des Fertigkeitsspektrums des weiteren Teilnehmers liegt;
d. Senden eines Angebots zum Ausführen der Aufgabe durch mindestens einen Hilfs-Teilnehmer in das Produktionsumfeld, der durch einen der weiteren Teilnehmer gebildet ist, bei dem das Ausführen der Aufgabe innerhalb des Fertigkeitsspektrums des Teilnehmers liegt und der von einem Produktions-Teilnehmer die in das Produktionsumfeld gesendete Aufgabe übernimmt und dem Produktions-Teilnehmer zuarbeitet; und
e. Bestimmen des Hilfs-Teilnehmers, dessen Fertigkeitsspektrum zum Ausführen der Aufgabe am geeignetsten ist und Ausführen der Aufgabe durch den bestimmten Hilfs-Teilnehmer.

Darüber hinaus umfasst die Erfindung eine Produktionsanlage, die nach einem derartigen Verfahren betreibbar ist.

Produktionsanlagen zum Herstellen, Fertigen und/oder Montieren von Produkten und/oder Gütern, sind aus dem Stand der Technik in unterschiedlichen Ausführungsformen bekannt. Bei diesen wird meist ein Herstellungsprozess, ein Fertigungsprozess und/oder ein Montageprozess zentral gesteuert, so dass von einem zentralen, übergeordneten Produktionssystem der Produktionsanlage den einzelnen Teilnehmern zum Abarbeiten eines Produktionsauftrags Aufgaben zugewiesen werden.

Wenn Teilnehmer im Produktionsumfeld ausfallen, beispielsweise infolge einer technischen Störung oder eines nicht vorhersehbaren Ereignisses, muss dieser Teilnehmer aufwändig durch das zentrale System ersetzt werden, bzw. die Aufgaben des ausgefallenen Teilnehmers auf andere Teilnehmer im Produktionsumfeld verteilt werden.

Gleiches gilt, wenn in dem Produktionsumfeld neue Teilnehmer eingliederbar sind, beispielsweise durch das Hinzufügen von autonom fahrbaren Fahrzeugen, die beispielsweise ungeplant von einem Produktionsumfeld in ein anderes Produktionsumfeld verlagert werden.

Gattungsgemäße Verfahren sind bekannt aus EP 4 089 618 A1 und EP 4 020 108 A1.

Eine Aufgabe eines Ausführungsbeispiels der Erfindung ist, ein Verfahren zum dezentralen Betreiben einer Produktionsanlage zum Herstellen, Fertigen und/oder Montieren von Produkten und/oder Gütern sowie eine Produktionsanlage, die nach einem derartigen Verfahren betreibbar ist, vorzuschlagen, bei der das Abarbeiten eines Produktionsauftrags flexibler gestaltbar ist.

Diese Aufgabe wird bei einem eingangs genannten Verfahren dadurch gelöst, dass der Hilfs-Teilnehmer (22) durch ein dezentrales Bieter-Verfahren bestimmt wird, bei dem jeder Teilnehmer (6) im Produktionsumfeld (4), bei dem das Ausführen der Aufgabe (20) innerhalb seines Fertigungsspektrum liegt, einen potentiellen Hilfs-Teilnehmer (14) bildet, mit den Schritten:
f. Senden jeweils eines Angebots einer Übernahme der Aufgabe (20), umfassend Informationen zum Ausführen der Aufgabe (20) relevanter Fertigkeiten des Fertigkeitsspektrums, durch alle potentiellen Hilfs-Teilnehmer (14) an das Produktionsumfeld (4);
g. Empfang aller Angebote durch jeden potentiellen Hilfs-Teilnehmer (14) im Produktionsumfeld (4) und Vergleichen der empfangenen Angebote mit dem eigenen Angebot durch die potentiellen Hilfs-Teilnehmer (14), wenn mindestens zwei Teilnehmer (6) jeweils einen potentiellen Hilfs-Teilnehmer (14) bilden, mit den zusätzlichen folgenden Einflussfaktoren und/oder Betriebsstrategieoptionen:
   i. Erkennen von Lösungsalternativen zum Ausführen der Aufgabe (20) in den Angeboten der weiteren potentiellen Hilfs-Teilnehmer (14);
   ii. Bewerten der Lösungsalternativen; und
   iii. Identifizieren und Auswahl der geeignetsten Lösungsalternative;
h. Rücknahme des eigenen Angebots durch die potentiellen Hilfs-Teilnehmer (14), dessen eigenes Angebot weniger geeignet ist, als das empfangene Angebot mindestens eines weiteren potentiellen Hilfs-Teilnehmers (14), wenn mindestens zwei Teilnehmer (6) jeweils einen potentiellen Hilfs-Teilnehmer (14) bilden, wobei der potentielle Hilfs-Teilnehmer (14) mit dem geeignetsten Angebot den Hilfs-Teilnehmer (22) bildet; und
i. Senden des Angebots des einzigen Hilfs-Teilnehmers (22) zumindest an den Produktions-Teilnehmer (12), wenn nur ein Teilnehmer (6) einen Hilfs-Teilnehmer (22) bildet, wobei der einzige potentielle Hilfs-Teilnehmer (14) den Hilfs-Teilnehmer (22) bildet, oder Senden des Angebots des verbleibenden Hilfs-Teilnehmers (22) an den Produktions-Teilnehmer (12), wenn mindestens zwei Teilnehmer (6) jeweils einen potentiellen Hilfs-Teilnehmer (14) bilden.

Dadurch, dass seitens des Produktions-Teilnehmers eine Aufgabe an das Produktionsumfeld gesendet wird und dort von einem weiteren Teilnehmer empfangen und ausgewertet wird, wird den Teilnehmern im Produktionsumfeld ein Angebot zur Übernahme einer Aufgabe gemacht.

Dadurch, dass die einzelnen Teilnehmer dieses Angebot prüfen und feststellen können, ob sie die Aufgabe übernehmen können und solchenfalls ein Angebot zur Übernahme der Aufgabe abliefern, welches angenommen und die Aufgabe an den Teilnehmer übertragen werden kann, ist ein dezentrales Verfahren zum Betreiben der Produktionsanlage gegeben. Dieses ermöglicht es, bei Ausfall eines Teilnehmers, die Aufgabe dieses Teilnehmers automatisch und selbstständig durch die verbleibenden Teilnehmer im Produktionsumfeld zu verteilen, ohne dass dieses zentral gesteuert werden muss und/oder ohne, dass hierfür Anpassungen in der Steuerung vorgenommen werden müssen. Dieses ermöglicht eine selbstständige Organisation des Systems bei wechselnden Rahmenbedingungen.

Darüber hinaus ist das Hinzufügen weiterer Teilnehmer auf einfache Weise gewährleistet.

Hierdurch findet eine Selbstorganisation der Teilnehmer statt, ohne dass dieses zentral gesteuert werden muss.

Bei der Produktionsanlage kann es sich beispielsweise um einen Maschinenpark mit einer oder mehreren Werkzeugmaschine/n bzw. Bearbeitungszentren handeln.

Darüber hinaus kann die Produktionsanlage eine Montagelinie umfassen, bei der aus mehreren Bauteilen und/oder Baugruppen ein fertiges Produkt gebildet wird.

Ferner hinaus kann es sich bei der Produktionsanlage auch um eine Schüttgutanlage handeln.

Schritt e. kann grundsätzlich beliebig erfolgen, sofern ein Hilfs-Teilnehmer identifiziert wird, der zum Ausführen der Aufgabe geeignet und/oder am geeignetsten ist.

Dadurch, dass die potentiellen Hilfs-Teilnehmer untereinander die Angebote der jeweils anderen Hilfs-Teilnehmer überprüfen und das eigene Angebot zurücknehmen, wenn mindestens ein Angebot eines weiteren potentiellen Hilfs-Teilnehmers besser ist, stimmen sich die potentiellen Hilfs-Teilnehmer untereinander ab.

Hierdurch muss keine zentrale Einheit vorgehalten werden, welche die einzelnen Angebote auswertet, sondern die Auswertung der Angebote findet durch die einzelnen Hilfs-Teilnehmer statt. Darüber hinaus muss hierdurch ebenfalls nicht in einer zentralen Einheit vorgehalten werden, welche Fertigkeiten, insbesondere welches Fertigkeitsspektrum, die einzelnen Hilfs-Teilnehmer umfassen, da die einzelnen Hilfs-Teilnehmer autonom und selbst entscheiden, ob die eigenen Fertigkeiten zum Ausführen des Auftrags ausreichend sind.

Unter einem Hilfs-Teilnehmer wird ein Teilnehmer verstanden, der von einem Produktions-Teilnehmer die in das Produktionsumfeld gesendete Aufgabe übernimmt und dem Produktions-Teilnehmer zuarbeitet.

Das Senden des Angebots des einzigen Hilfs-Teilnehmers kann nicht nur an den Produktions-Teilnehmer erfolgen, sondern auch an das Produktionsumfeld, insbesondere an die weiteren potentiellen Hilfs-Teilnehmer.

Unter einem potentiellen Hilfs-Teilnehmer wird ein Teilnehmer verstanden, der sich im Zuge des Bieter-Verfahrens um die Rolle des Hilfs-Teilnehmers bewirbt. Wenn der Teilnehmer feststellt, dass die angebotene Aufgabe innerhalb seines Fertigungsspektrums liegt, wird er hierdurch automatisch zum potentiellen Hilfs-Teilnehmer, wobei die letztendliche Wahl zum Hilfs-Teilnehmer am Ende des Bieter-Verfahrens bestimmt wird, bzw. feststeht.

Alternativ zu letztgenannter Ausführungsform des Verfahrens wird die Aufgabe bei einem eingangs genannten Verfahren dadurch gelöst, dass der Hilfs-Teilnehmer (22) durch ein zentrales Bieter-Verfahren bestimmt wird, bei dem jeder Teilnehmer (6) im Produktionsumfeld (4), bei dem das Ausführen der Aufgabe (20) innerhalb seines Fertigungsspektrum liegt, einen potentiellen Hilfs-Teilnehmer (14) bildet, mit den Schritten:
f. Senden eines Angebots einer Übernahme der Aufgabe (20), umfassend Informationen zum Ausführen der Aufgabe (20) relevanter Fertigkeiten des Fertigkeitsspektrums, durch alle potentiellen Hilfs-Teilnehmer (14) an das Produktionsumfeld (4);
g. Empfang des Angebots des einzigen oder aller potentiellen Hilfs-Teilnehmer (14) durch den Produktions-Teilnehmer (12) und/oder durch das übergeordnete Produktionssystem (18) und ggf. Vergleichen der Angebote der potentiellen Hilfs-Teilnehmer (14), wenn mindestens zwei Teilnehmer (6) jeweils einen potentiellen Hilfs-Teilnehmer (14) bilden, mit den zusätzlichen folgenden Einflussfaktoren und/oder Betriebsstrategieoptionen:
   i. Erkennen von Lösungsalternativen zum Ausführen der Aufgabe (20) in den Angeboten der weiteren potentiellen Hilfs-Teilnehmer (14);
   ii. Bewerten der Lösungsalternativen; und
   iii. Identifizieren und Auswahl der geeignetsten Lösungsalternative;
h. Bestimmen des Hilfs-Teilnehmers (22), der durch den potentiellen Hilfs-Teilnehmer (14) gebildet ist, dessen Angebot zum Ausführen der Aufgabe (20) am geeignetsten ist durch den Produktions-Teilnehmer (12) und/oder durch das übergeordnete Produktionssystem (18); und
i. Senden des Angebots des bestimmten Hilfs-Teilnehmers (22) zumindest an den Produktions-Teilnehmer (12), das zum Ausführen der Aufgabe (20) am geeignetsten ist und Rücknahme der Angebote der weiteren potentiellen Hilfs-Teilnehmer (14).

Bei dieser Variante senden die einzelnen Teilnehmer, die festgestellt haben, dass sie die angebotene Aufgabe übernehmen können, ihr Angebot an das übergeordnete Produktionssystem. Dort findet dann die Auswertung statt, welches Angebot angenommen wird und welcher potentielle Hilfs-Teilnehmer zum Hilfs-Teilnehmer ernannt wird. Auch hier findet ein Bieter-Verfahren statt.

Das Senden des Angebots des einzigen Hilfs-Teilnehmers kann nicht nur an den Produktions-Teilnehmer erfolgen, sondern auch an das Produktionsumfeld, insbesondere an die weiteren potentiellen Hilfs-Teilnehmer.

Auch bei dem zentralen Bieter-Verfahren findet ein dezentrales Betreiben der Produktionsanlage statt, da die Entscheidung, welcher Teilnehmer zum potentiellen Hilfs-Teilnehmer wird, von jedem Teilnehmer individuell getroffen wird. Dieses ist skalierbar und erhöht die Flexibilität der Produktionsanlage.

Bei Ausführungsformen des Verfahrens ist es denkbar, dass mindestens eine der mindestens einen Aufgabe des Produktionsauftrags vom Produktionssystem der Produktionsanlage definiert und vorgegeben ist und/oder dass der Produktions-Teilnehmer ein Analysieren des Produktionsauftrags durchführt und mindestens eine der mindestens einen Aufgabe zum Erfüllen des Produktionsauftrags auf Grundlage der Analyse definiert.

Wenn die mindestens eine der mindestens einen Aufgabe des Produktionsauftrags vom Produktionssystem der Produktionsanlage definiert und vorgegeben ist, kann der Produktions-Teilnehmer technisch, insbesondere bezüglich Sensorik oder Hardware, vereinfacht ausgebildet sein.

Wenn der Produktions-Teilnehmer ein Analysieren des Produktionsauftrags durchführt und mindestens einer der mindestens einen Aufgabe zum Erfüllen des Produktionsauftrags auf Grundlage der Analyse definiert, kann der Produktions-Teilnehmer selbst entscheiden und identifizieren, bei welcher Tätigkeit, also bei welcher Aufgabe, er auf einen Hilfs-Teilnehmer zurückgreifen muss. Hierdurch ist ein dezentrales Betreiben des Verfahrens erweitert, da ein Definieren von Aufgaben nicht zentral zugewiesen werden muss, sondern die Aufgaben durch die einzelnen Teilnehmer selbst erkannt werden.

Das dezentrale Bieter-Verfahren und/oder das zentrale Bieter-Verfahren können grundsätzlich zeitlich unbefristet sein. Um eine Entscheidungsfindung, insbesondere ein Zuweisen von Aufgaben, zeitnah zu erreichen, erweist es sich als vorteilhaft, wenn das vergleichende Angebot durch die potentiellen Hilfs-Teilnehmer oder durch den Produktions-Teilnehmer und/oder durch das übergeordnete Produktionssystem nach einer Zeitspanne von mindestens einer Sekunde, insbesondere von mindestens fünf Sekunden, insbesondere von mindestens zehn Sekunden, insbesondere von mindestens dreißig Sekunden, nach dem Senden des Angebots zum Ausführen der Aufgabe durch einen potentiellen Hilfs-Teilnehmer erfolgt.

Hierdurch kann eine verspätete Entscheidungsfindung vermieden werden.

Unter den Fertigkeiten des Fertigkeitsspektrums der einzelnen Teilnehmer werden die Fertigkeiten verstanden, die zum Ausführen einer Aufgabe oder eines Produktionsauftrags notwendig sind. Bei einer Ausführungsform des Verfahrens erweist es sich als vorteilhaft, wenn die Fertigkeiten des Fertigkeitsspektrums die Bewegungsmöglichkeit, Geschwindigkeit, Energie- und/oder Treibstoffreserve, Greiffähigkeit, Ablagefähigkeit, Bestückungsoptionen des Teilnehmers mit Werkzeugen, Auftrags- und/oder Arbeitsstatus, Bearbeitungsmöglichkeiten von Produkten und/oder Gütern, Tragfähigkeit und/oder freie Ladekapazitäten und/oder freies Beladevolumen, Umfeldinformationen, Entfernung zum Produktions-Teilnehmer, Möglichkeit zur Parallelbearbeitung umfasst.

Hierbei sind die zuvor genannten Fertigkeiten eine offene Aufzählung und es können noch weitere Fertigkeiten hinzukommen.

Bei den Verfahren sind unterschiedliche Betriebsstrategieoptionen erfassbar und bewertbar.

Eine Betriebsstrategieoption kann beispielsweise sein, die Aufgabe und/oder den Produktionsauftrag besonders energiesparend auszuführen. Eine weitere Betriebsstrategieoption kann sein, den Auftrag so schnell als möglich auszuführen. Ferner kann eine weitere Strategieoption eine optimale Auslastung aller vorhandenen Teilnehmer umfassen.

Um das geeignetste Angebot der einzelnen potentiellen Hilfs-Teilnehmer erfassen zu können, erweist es sich bei einer Ausführungsform des Verfahrens als vorteilhaft, wenn das Vergleichen des Angebots mit dem eigenen Angebot durch den jeweiligen potentiellen Hilfs-Teilnehmer zusätzlich eine in der Recheneinheit hinterlegte Wichtung und/oder Gewichtungen der einzelnen Fertigkeiten der Teilnehmer umfasst.

Solchenfalls können den einzelnen Fertigkeiten der Teilnehmer unterschiedliche Wichtungen oder Gewichtungen zugeordnet sein. Beispielsweise kann der Einflussfaktor der Geschwindigkeit des Hilfs-Teilnehmers bei einer besonders schnellen Abarbeitungsbetriebsstrategieoption höher gewichtet sein als eine vorhandene Energie- und/oder Treibstoffreserve oder ein besonders energiearmer Betrieb des Hilfs-Teilnehmers.

Der Hilfs-Teilnehmer kann grundsätzlich durch einen beliebigen Teilnehmer im Produktionsumfeld gebildet sein. Bei Ausführungsformen des Verfahrens erweist es sich als vorteilhaft, wenn mindestens ein Hilfs-Teilnehmer einen Roboter, ein Lagersystem oder ein Transportsystem wie autonom fahrendes Fahrzeug (AGV), und/oder dass mindestens ein Produktions-Teilnehmer eine Bearbeitungsmaschine oder eine Montagestation umfasst.

Darüber hinaus sind Ausführungsformen des Verfahrens denkbar, bei denen der ein Angebot zum Ausführen der Aufgabe sendende potentielle Hilfs-Teilnehmer auftragsfrei ist oder dass der ein Angebot zum Ausführen der Aufgabe sendende potentielle Hilfs-Teilnehmer sich in Bearbeitung einer bereits angenommenen Aufgabe befindet.

Wenn der Teilnehmer, der ein Angebot zum Ausführen der Aufgabe bekommt, auftragsfrei ist, kann bei Zuweisung oder Zuschlag des Auftrags an den Teilnehmer dieser unmittelbar mit dem Abarbeiten der Aufgabe beginnen.

Wenn der ein Angebot zum Ausführen der Aufgabe sendende Teilnehmer sich in Bearbeitung einer bereits angenommenen Aufgabe befindet, können auch die Teilnehmer am Bieterverfahren teilnehmen, die derzeit nicht auftragsfrei sind.

Bei einer Weiterbildung letztgenannter Ausführungsform erweist es sich als vorteilhaft, wenn der sich in Bearbeitung befindliche potentielle Hilf-Teilnehmer bei Übernahme der neuen Aufgabe die aktive Bearbeitung der bereits angenommenen vorigen Aufgabe bei Zuteilung der neuen Aufgabe bis zum Abschluss der Bearbeitung der neuen Aufgabe pausiert oder die vorige Aufgabe an das Produktionsumfeld zur Übernahme durch einen weiteren potentiellen Hilfs-Teilnehmer sendet.

Solchenfalls kann der sich in Bearbeitung befindliche Teilnehmer bei Übernahme der neuen Aufgabe die derzeit aktive Aufgabe pausieren oder die derzeit aktive Aufgabe im Rahmen des Bieterverfahrens an das Produktionsfeld zur Übernahme durch einen weiteren Teilnehmer senden und hierdurch anbieten.

Durch beide Maßnahmen ist es ermöglicht, dass stets der Teilnehmer zur Übernahme der Aufgabe gefunden wird, der am geeignetsten ist.

Darüber hinaus ist bei einer Weiterbildung letztgenannter Ausführungsform vorgesehen, dass der sich in Bearbeitung befindliche potentielle Hilfs-Teilnehmer die neue Aufgabe nur dann übernimmt und/oder nur dann ein Angebot zum Ausführen der Aufgabe sendet, wenn die vom Produktions-Teilnehmer gesendete neue Aufgabe eine höhere Priorität aufweist als die aktive vorige Aufgabe und/oder wenn alle weiteren potentiellen Hilfs-Teilnehmer wesentlich weniger geeignet zum Bearbeiten der Aufgabe sind.

Solchenfalls entscheidet der potentielle Hilfs-Teilnehmer vor der Übernahme einer Aufgabe und/oder vor dem Senden eines Angebots zum Ausführen der Aufgabe, ob die neue Aufgabe wichtiger ist als die bereits in Bearbeitung befindliche Aufgabe.

Hierdurch ist ein effizientes Betreiben der Produktionsanlage weiter verbessert.

Um ein Auswerten der Aufgabe zu verbessern, erweist es sich als vorteilhaft, wenn die Aufgabe Informationen über notwendige Fertigkeiten, Wichtungen und/oder Gewichtungen der Fertigkeiten des Teilnehmers sowie Informationen über Einflussfaktoren und/oder Betriebsstrategieoptionen umfasst und/oder wenn der Teilnehmer ein Auswerten der Aufgabe und eine Analyse, Identifizierung und/oder Interpretation der zur Lösung der Aufgabe notwendigen Fertigkeiten durchführt.

Hierdurch ist es für die einzelnen Teilnehmer einfacher zu beurteilen, ob die Aufgabe innerhalb des eigenen Fertigkeitsspektrums liegt.

Die Aufgabe kann grundsätzlich beliebig ausgestaltet sein. Bei Ausführungsbeispielen des Verfahrens ist vorgesehen, dass die Aufgabe ein Bearbeiten, einen Transport, ein Be- und Entladen oder ein Lagern von Produkten, Gütern, Teilen, Schüttgut, Werkstücken, einer Palette/Tablar, einer Vorrichtung, eines Greifers und/oder Werkzeugs umfasst.

Ferner erweist es sich als vorteilhaft, wenn mindestens einer der mindestens drei Teilnehmer jeweils ein maschinenerfassbares und/oder anwendererfassbares Informationselement umfasst.

Wenn mindestens einer der mindestens drei Teilnehmer ein maschinenerfassbares und/oder anwendererfassbares Informationselement umfasst, ist der mindestens eine Teilnehmer passiv erfassbar, also nicht von sich heraus, sondern durch die weiteren Teilnehmer als solcher erkennbar. Das maschinenerfassbare Informationselement kann beispielsweise einen Code, insbesondere Strich-Code, QR-Code oder Dergleichen, umfassen. Das anwendererfassbare Informationselement kann eine Beschriftung und/oder ein Bildelement umfassen.

Schließlich wird die Aufgabe gelöst durch eine Produktionsanlage zum Herstellen, Fertigen und/oder Montieren von Produkten und/oder Gütern, die in einem Produktionsumfeld mindestens drei Teilnehmer umfasst, wobei jeder Teilnehmer eine Recheneinheit, in der durch den jeweiligen Teilnehmer ein Fertigkeitsspektrum erfassbar ist, und wobei jeder Teilnehmer eine Sende- und Empfangseinheit zum Senden und Empfangen elektromagnetischer Wellen umfasst, die nach einem Verfahren mit mindestens einem der zuvor genannten Merkmale betreibbar ist.

Weitere Merkmale, Einzelheiten und Vorteile der Erfindung ergeben sich aus den beigefügten Patentansprüchen, aus der zeichnerischen Darstellung und nachfolgenden Beschreibung einer bevorzugten Ausführungsform der Produktionsanlage und des Verfahrens.

In der Zeichnung zeigt:
- Figur 1: Eine schematische Darstellung einer erfindungsgemäßen Produktionsanlage;
- Figur 2: Ein schematisches Ablaufdiagramm eines erfindungsgemäßen Verfahrens;
- Figur 3: Ein erster Schritt des Verfahrens gemäß Figur 2 mit den beteiligten Komponenten gemäß Figur 1;
- Figur 4: Ein zweiter Schritt des Verfahrens gemäß Figur 2 mit den beteiligten Komponenten gemäß Figur 1;
- Figur 5: Ein dritter Schritt des Verfahrens gemäß Figur 2 mit den beteiligten Komponenten gemäß Figur 1;
- Figur 6: Ein vierter Schritt des Verfahrens gemäß Figur 2 mit den beteiligten Komponenten gemäß Figur 1;
- Figur 7: Ein fünfter Schritt des Verfahrens gemäß Figur 2 mit den beteiligten Komponenten gemäß Figur 1.

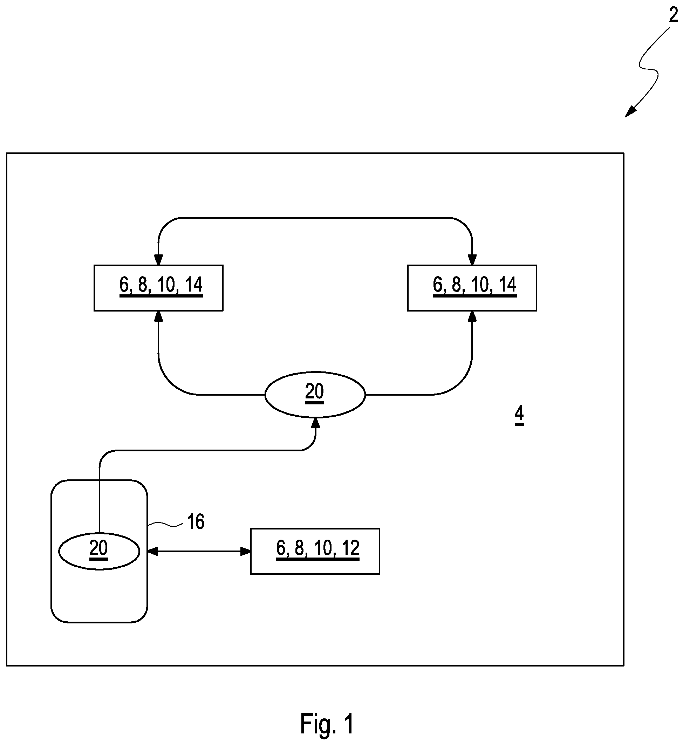

Figur 1 zeigt eine insgesamt mit dem Bezugszeichen 2 versehene Produktionsanlage zum Herstellen, Fertigen und/oder Montieren von Produkten und/oder Gütern.

Die Produktionsanlage 2 umfasst ein Produktionsumfeld 4, in dem mindestens drei Teilnehmer 6 angeordnet sind. Jeder Teilnehmer 6 umfasst eine Recheneinheit 8, in der durch den jeweiligen Teilnehmer 6 ein Fertigkeitsspektrum erfassbar ist.

Darüber hinaus umfasst jeder Teilnehmer 6 eine Sende- und Empfangseinheit 10 zum Senden und Empfangen elektromagnetischer Wellen.

Figur 1 zeigt die Produktionsanlage 2, bei der einer der drei Teilnehmer 6 einen Produktions-Teilnehmer 12 bildet und die beiden verbleibenden Teilnehmer 6 einen potentiellen Hilfs-Teilnehmer 14.

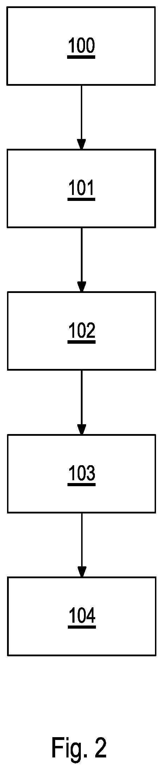

Figur 2 zeigt ein schematisches Ablaufdiagramm des erfindungsgemäßen Verfahrens.

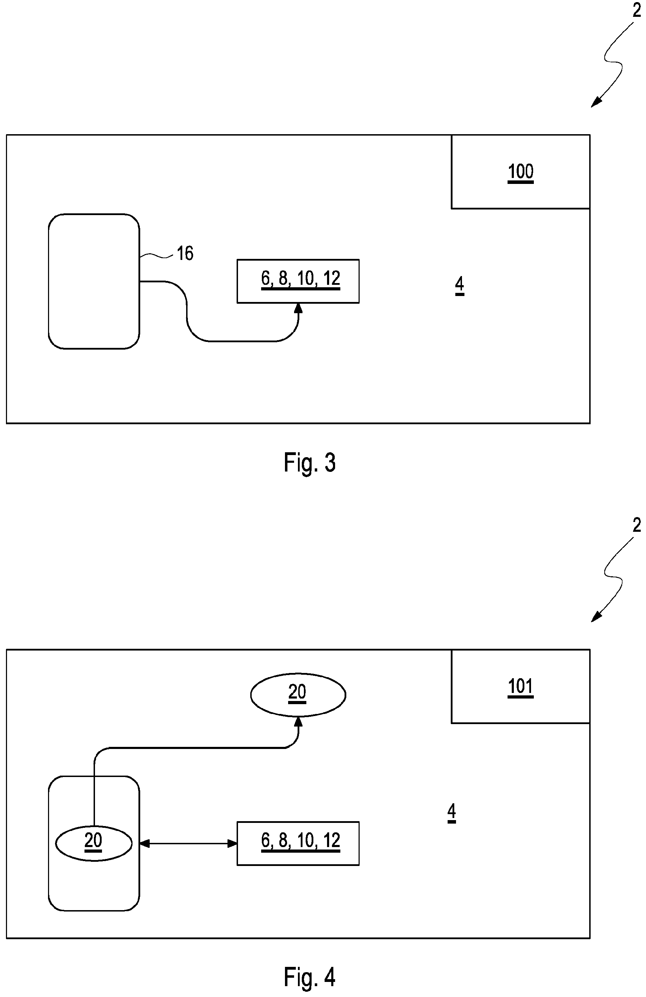

Unter Verweis der Gesamtdarstellung der Figur 1 sowie die Darstellung zu den einzelnen Schritten 100 bis 104 in den Figuren 3 bis 7, wird nachfolgend das Verfahren beschrieben.

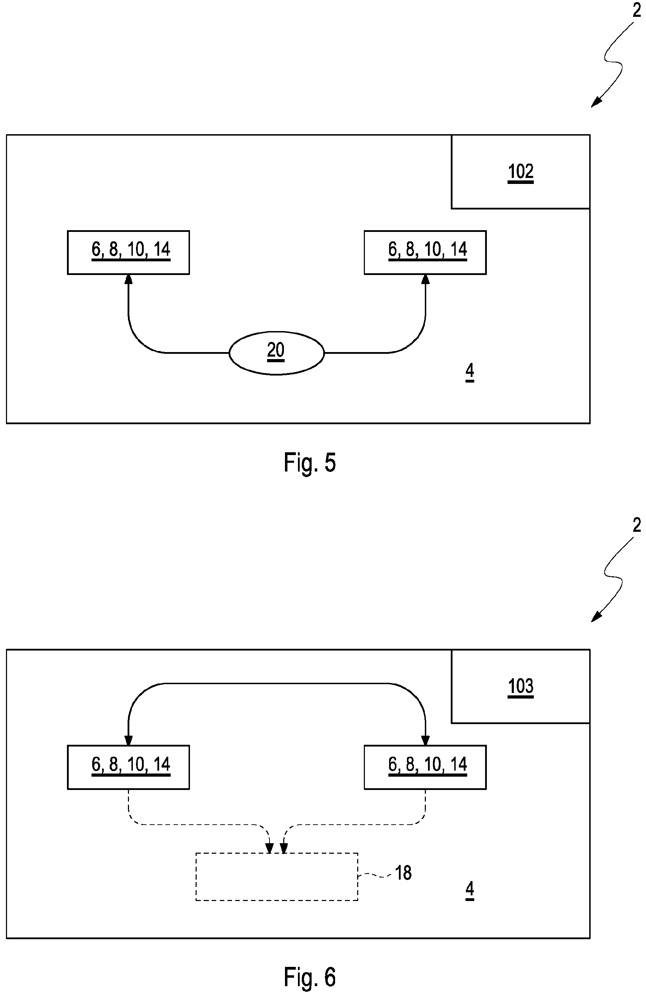

**In** einem ersten Schritt 100 (siehe auch Figur 3) wird ein Produktionsauftrag 16 aus einem Produktionssystem 18 (in Figur 6 dargestellt) durch einen der Teilnehmer 6 übernommen. Dieser Teilnehmer 6 bildet solchenfalls den Produktions-Teilnehmer 12.

Die Übernahme des Produktionsauftrags 16 durch den Produktions-Teilnehmer 12 kann ein Zuweisen des Produktionsauftrags 16 an einen der Teilnehmer 6 umfassen oder aber einer der Teilnehmer 6 bewirbt sich und übernimmt den Produktionsauftrag 16 im Rahmen eines Bieterverfahrens.

In einem anschließenden Schritt 101 (siehe auch Figur 4) wird eine Aufgabe 20 des Produktionsauftrags 16 durch den Produktions-Teilnehmer 12 identifiziert, die außerhalb des Fertigkeitsspektrums des Produktions-Teilnehmers 12 liegt.

Diese außerhalb des Fertigkeitsspektrums des Produktions-Teilnehmers 12 liegende Aufgabe 20 wird an das Produktionsumfeld 4 gesendet.

In einem anschließenden Schritt 102 (siehe auch Figur 5) wird die gesendete Aufgabe 20 durch mindestens einen weiteren Teilnehmer 6 im Produktionsumfeld 4 empfangen und durch den Teilnehmer 6 geprüft, ob das Ausführen der Aufgabe 20 innerhalb des Fertigkeitsspektrums des jeweiligen Teilnehmers 6 liegt.

In einem nachfolgenden Schritt 103 (siehe auch Figur 6) wird ein Angebot zum Ausführen der Aufgabe 20 durch mindestens einen Hilfs-Teilnehmer 22 an das Produktionsumfeld 4 gesendet. Die Hilfs-Teilnehmer 22 sind durch die Teilnehmer 6 gebildet, bei denen das Ausführen der Aufgabe 20 innerhalb des jeweiligen Fertigkeitsspektrums des jeweiligen Teilnehmers 6 liegt.

Mit Blick in Figur 6 kann das Senden des Angebots unterschiedliche Ausführungsmöglichkeiten haben. Mit durchgezogener Linie dargestellt, ist das Senden des Angebots zum Ausführen der Aufgabe 20 in einem so genannten dezentralen Bieter-Verfahren dargestellt. Hierbei empfangen die weiteren Teilnehmer 6 das Angebot der anderen Teilnehmer 6, bei denen das Ausführen der Aufgabe 20 innerhalb des Fertigkeitsspektrums liegt. Hierbei werden alle Angebote durch jeden potentiellen Hilfs-Teilnehmer 14 empfangen und mit dem eigenen Angebot verglichen.

Wenn das Angebot eines weiteren potentiellen Hilfs-Teilnehmers 14 besser geeignet zum Ausführen der Aufgabe 20 ist als das eigene Angebot, wird das eigene Angebot zurückgenommen. Der einzige verbleibende potentielle Hilfs-Teilnehmer 14, also der potentielle Hilfs-Teilnehmer 14, dessen Angebot zum Ausführen der Aufgabe 20 am geeignetsten ist, wird zum Hilfs-Teilnehmer 22.

Darüber hinaus zeigt Figur 6 auch eine weitere Möglichkeit in Form eines zentralen Bieter-Verfahrens (gestrichelt dargestellt). Hierbei werden die Angebote zur Übernahme der Aufgabe 20 durch die einzelnen potentiellen Hilfs-Teilnehmer 14 an das übergeordnete Produktionssystem 18 gesendet und von diesem ausgewertet. Das zentrale Produktionssystem 18 identifiziert solchenfalls den potentiellen Hilfs-Teilnehmer 14, dessen Angebot am geeignetsten ist, die Aufgabe 20 zu lösen und ernennt diesen zum Hilfs-Teilnehmer 22.

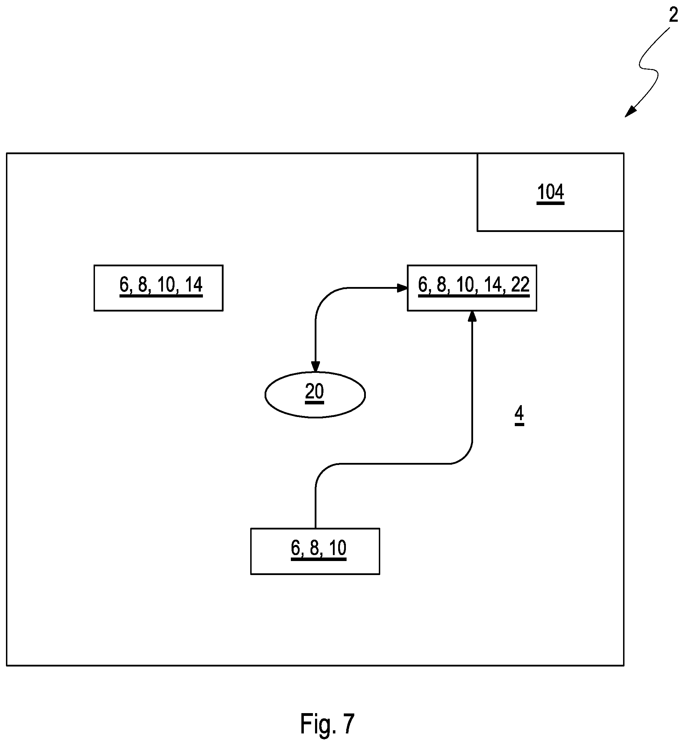

In einem abschließenden Schritt 104 (siehe auch Figur 7) wird der Hilfs-Teilnehmer 22 bestimmt, dessen Fertigkeitsspektrum zum Ausführen der Aufgabe 20 am geeignetsten ist. Durch diesen bestimmten Hilfs-Teilnehmer 22 wird dann die Aufgabe 20 ausgeführt.

Die in der vorstehenden Beschreibung, in den Ansprüchen sowie in der Zeichnung offenbarten Merkmale der Erfindung, können sowohl einzeln, als auch in jeder beliebigen Kombination in der Verwirklichung der Erfindung in ihren verschiedenen Ausführungsformen im Rahmen des Schutzumfangs der nachfolgenden Ansprüche wesentlich sein.

### Bezugszeichenliste

- 2: Produktionsanlage
- 4: Produktionsumfeld
- 6: Teilnehmer
- 8: Recheneinheit
- 10: Sende- und Empfangseinheit
- 12: Produktions-Teilnehmer
- 14: potentieller Hilfs-Teilnehmer
- 16: Produktionsauftrag
- 18: Produktionssystem
- 20: Aufgabe
- 22: Hilfs-Teilnehmer

- 100-104: Verfahrensschritte

## Patentansprüche

1. Verfahren zum dezentralen Betreiben einer Produktionsanlage (2) zum Herstellen, Fertigen und/oder Montieren von Produkten und/oder Gütern, die in einem Produktionsumfeld (4) mindestens drei Teilnehmer (6) umfasst, wobei jeder Teilnehmer (6) eine Recheneinheit (8), in der durch den jeweiligen Teilnehmer (6) ein Fertigkeitsspektrum erfassbar ist, und wobei jeder Teilnehmer (6) eine Sende- und Empfangseinheit (10) zum Senden und Empfangen elektromagnetischer Wellen umfasst, mit den Schritten:
a. Übernahme eines mindestens eine Aufgabe (20) umfassenden Produktionsauftrags (16) aus einem Produktionssystem (18) der Produktionsanlage (2) durch einen Teilnehmer (6), der einen Produktions-Teilnehmer (12) bildet;
b. Identifizieren einer außerhalb des Fertigkeitsspektrums liegenden Aufgabe (20) der mindestens einen Aufgabe (20) durch den Produktions-Teilnehmer (12) und Senden der identifizierten Aufgabe (20) an das Produktionsumfeld (4); **gekennzeichnet durch**
c. Empfangen der gesendeten Aufgabe (20) **durch** mindestens einen weiteren Teilnehmer (6) im Produktionsumfeld (4) und Prüfen durch den weiteren Teilnehmer (6), ob das Ausführen der Aufgabe (20) innerhalb des Fertigkeitsspektrums des weiteren Teilnehmers (6) liegt;
d. Senden eines Angebots zum Ausführen der Aufgabe (20) **durch** mindestens einen Hilfs-Teilnehmer (22) in das Produktionsumfeld (4), der **durch** einen der weiteren Teilnehmer (6) gebildet ist, bei dem das Ausführen der Aufgabe (20) innerhalb des Fertigkeitsspektrums des Teilnehmers (6) liegt und der von einem Produktions-Teilnehmer (12) die in das Produktionsumfeld (4) gesendete Aufgabe übernimmt und dem Produktions-Teilnehmer (12) zuarbeitet; und
e. Bestimmen des Hilfs-Teilnehmers (22), dessen Fertigkeitsspektrum zum Ausführen der Aufgabe (20) am geeignetsten ist und Ausführen der Aufgabe (20) **durch** den bestimmten Hilfs-Teilnehmer (22);
wobei der Hilfs-Teilnehmer (22) **durch** ein dezentrales Bieter-Verfahren bestimmt wird, bei dem jeder Teilnehmer (6) im Produktionsumfeld (4), bei dem das Ausführen der Aufgabe (20) innerhalb seines Fertigungsspektrum liegt, einen potentiellen Hilfs-Teilnehmer (14) bildet, mit den Schritten:
f. Senden jeweils eines Angebots einer Übernahme der Aufgabe (20), umfassend Informationen zum Ausführen der Aufgabe (20) relevanter Fertigkeiten des Fertigkeitsspektrums, **durch** alle potentiellen Hilfs-Teilnehmer (14) an das Produktionsumfeld (4);
g. Empfang aller Angebote **durch** jeden potentiellen Hilfs-Teilnehmer (14) im Produktionsumfeld (4) und Vergleichen der empfangenen Angebote mit dem eigenen Angebot **durch** die potentiellen Hilfs-Teilnehmer (14), wenn mindestens zwei Teilnehmer (6) jeweils einen potentiellen Hilfs-Teilnehmer (14) bilden, mit den zusätzlichen folgenden Einflussfaktoren und/oder Betriebsstrategieoptionen:
i. Erkennen von Lösungsalternativen zum Ausführen der Aufgabe (20) in den Angeboten der weiteren potentiellen Hilfs-Teilnehmer (14);
ii. Bewerten der Lösungsalternativen; und
iii. Identifizieren und Auswahl der geeignetsten Lösungsalternative;
h. Rücknahme des eigenen Angebots **durch** die potentiellen Hilfs-Teilnehmer (14), dessen eigenes Angebot weniger geeignet ist, als das empfangene Angebot mindestens eines weiteren potentiellen Hilfs-Teilnehmers (14), wenn mindestens zwei Teilnehmer (6) jeweils einen potentiellen Hilfs-Teilnehmer (14) bilden, wobei der potentielle Hilfs-Teilnehmer (14) mit dem geeignetsten Angebot den Hilfs-Teilnehmer (22) bildet; und
i. Senden des Angebots des einzigen Hilfs-Teilnehmers (22) zumindest an den Produktions-Teilnehmer (12), wenn nur ein Teilnehmer (6) einen Hilfs-Teilnehmer (22) bildet, wobei der einzige potentielle Hilfs-Teilnehmer (14) den Hilfs-Teilnehmer (22) bildet, oder Senden des Angebots des verbleibenden Hilfs-Teilnehmers (22) an den Produktions-Teilnehmer (12), wenn mindestens zwei Teilnehmer (6) jeweils einen potentiellen Hilfs-Teilnehmer (14) bilden.

2. Verfahren zum dezentralen Betreiben einer Produktionsanlage (2) zum Herstellen, Fertigen und/oder Montieren von Produkten und/oder Gütern, die in einem Produktionsumfeld (4) mindestens drei Teilnehmer (6) umfasst, wobei jeder Teilnehmer (6) eine Recheneinheit (8), in der durch den jeweiligen Teilnehmer (6) ein Fertigkeitsspektrum erfassbar ist, und wobei jeder Teilnehmer (6) eine Sende- und Empfangseinheit (10) zum Senden und Empfangen elektromagnetischer Wellen umfasst, mit den Schritten:
a. Übernahme eines mindestens eine Aufgabe (20) umfassenden Produktionsauftrags (16) aus einem Produktionssystem (18) der Produktionsanlage (2) durch einen Teilnehmer (6), der einen Produktions-Teilnehmer (12) bildet;
b. Identifizieren einer außerhalb des Fertigkeitsspektrums liegenden Aufgabe (20) der mindestens einen Aufgabe (20) durch den Produktions-Teilnehmer (12) und Senden der identifizierten Aufgabe (20) an das Produktionsumfeld (4); **gekennzeichnet durch**
c. Empfangen der gesendeten Aufgabe (20) **durch** mindestens einen weiteren Teilnehmer (6) im Produktionsumfeld (4) und Prüfen durch den weiteren Teilnehmer (6), ob das Ausführen der Aufgabe (20) innerhalb des Fertigkeitsspektrums des weiteren Teilnehmers (6) liegt;
d. Senden eines Angebots zum Ausführen der Aufgabe (20) **durch** mindestens einen Hilfs-Teilnehmer (22) in das Produktionsumfeld (4), der **durch** einen der weiteren Teilnehmer (6) gebildet ist, bei dem das Ausführen der Aufgabe (20) innerhalb des Fertigkeitsspektrums des Teilnehmers (6) liegt und der von einem Produktions-Teilnehmer (12) die in das Produktionsumfeld (4) gesendete Aufgabe übernimmt und dem Produktions-Teilnehmer (12) zuarbeitet; und
e. Bestimmen des Hilfs-Teilnehmers (22), dessen Fertigkeitsspektrum zum Ausführen der Aufgabe (20) am geeignetsten ist und Ausführen der Aufgabe (20) **durch** den bestimmten Hilfs-Teilnehmer (22);
wobei der Hilfs-Teilnehmer (22) **durch** ein zentrales Bieter-Verfahren bestimmt wird, bei dem jeder Teilnehmer (6) im Produktionsumfeld (4), bei dem das Ausführen der Aufgabe (20) innerhalb seines Fertigungsspektrum liegt, einen potentiellen Hilfs-Teilnehmer (14) bildet, mit den Schritten:
f. Senden eines Angebots einer Übernahme der Aufgabe (20), umfassend Informationen zum Ausführen der Aufgabe (20) relevanter Fertigkeiten des Fertigkeitsspektrums, **durch** alle potentiellen Hilfs-Teilnehmer (14) an das Produktionsumfeld (4);
g. Empfang des Angebots des einzigen oder aller potentiellen Hilfs-Teilnehmer (14) **durch** den Produktions-Teilnehmer (12) und/oder durch das übergeordnete Produktionssystem (18) und ggf. Vergleichen der Angebote der potentiellen Hilfs-Teilnehmer (14), wenn mindestens zwei Teilnehmer (6) jeweils einen potentiellen Hilfs-Teilnehmer (14) bilden, mit den zusätzlichen folgenden Einflussfaktoren und/oder Betriebsstrategieoptionen:
i. Erkennen von Lösungsalternativen zum Ausführen der Aufgabe (20) in den Angeboten der weiteren potentiellen Hilfs-Teilnehmer (14);
ii. Bewerten der Lösungsalternativen; und
iii. Identifizieren und Auswahl der geeignetsten Lösungsalternative;
h. Bestimmen des Hilfs-Teilnehmers (22), der **durch** den potentiellen Hilfs-Teilnehmer (14) gebildet ist, dessen Angebot zum Ausführen der Aufgabe (20) am geeignetsten ist **durch** den Produktions-Teilnehmer (12) und/oder **durch** das übergeordnete Produktionssystem (18); und
i. Senden des Angebots des bestimmten Hilfs-Teilnehmers (22) zumindest an den Produktions-Teilnehmer (12), das zum Ausführen der Aufgabe (20) am geeignetsten ist und Rücknahme der Angebote der weiteren potentiellen Hilfs-Teilnehmer (14).

3. Verfahren nach einem der vorhergehenden Ansprüche, **dadurch gekennzeichnet, dass** mindestens eine Aufgabe (20) des Produktionsauftrags (16) vom Produktionssystem (18) der Produktionsanlage (2) definiert und vorgegeben ist und/oder dass der Produktions-Teilnehmer (12) ein Analysieren des Produktionsauftrags (16) durchführt und mindestens eine der mindestens einen Aufgabe (20) zum Erfüllen des Produktionsauftrags (16) auf Grundlage der Analyse selbstständig definiert.

4. Verfahren nach einem der vorhergehenden Ansprüche, **dadurch gekennzeichnet, dass** die Fertigkeiten des Fertigkeitsspektrums die Bewegungsmöglichkeit, Geschwindigkeit, Energie- und/oder Treibstoffreserve, Greiffähigkeit, Ablagefähigkeit, Bestückungsoptionen des Teilnehmers (6) mit Werkzeugen, Auftrags- und/oder Arbeitsstatus, Bearbeitungsmöglichkeiten von Produkten und/oder Gütern, Tragfähigkeit und/oder freie Ladekapazitäten und und/oder freies Beladevolumen, Umfeldinformation, Entfernung zum Produktions-Teilnehmer (12), Möglichkeit zur Parallelbearbeitung umfasst.

5. Verfahren nach einem der vorhergehenden Ansprüche, **dadurch gekennzeichnet, dass** das Vergleichen des Angebots mit dem eigenen Angebot durch den jeweiligen potentiellen Hilfs-Teilnehmer (14) zusätzlich eine in der Recheneinheit (8) hinterlegte Wichtung und/oder Gewichtungen der einzelnen Fertigkeiten der Teilnehmer (6) umfasst.

6. Verfahren nach einem der vorhergehenden Ansprüche, **dadurch gekennzeichnet, dass** mindestens ein Hilfs-Teilnehmer (22) einen Roboter, ein Lagersystem oder ein Transportsystem wie autonom fahrendes Fahrzeug (AGV), und/oder dass mindestens ein Produktions-Teilnehmer (12) eine Bearbeitungsmaschine oder eine Montagestation umfasst.

7. Verfahren nach einem der vorhergehenden Ansprüche, **dadurch gekennzeichnet, dass** der ein Angebot zum Ausführen der Aufgabe (20) sendende potentielle Hilfs-Teilnehmer (14) auftragsfrei ist oder dass der ein Angebot zum Ausführen der Aufgabe (20) sendende potentielle Hilfs-Teilnehmer (14) sich in Bearbeitung einer bereits angenommenen Aufgabe (20) befindet.

8. Verfahren nach Anspruch 7, **dadurch gekennzeichnet, dass** der sich in Bearbeitung befindliche potentielle Hilfs-Teilnehmer (14) bei Übernahme der neuen Aufgabe (20) die aktive Bearbeitung der bereits angenommenen vorigen Aufgabe (20) bei Zuteilung der neuen Aufgabe (20) bis zum Abschluss der Bearbeitung der neuen Aufgabe (20) pausiert oder die vorige Aufgabe (20) an das Produktionsumfeld (4) zur Übernahme durch einen weiteren potentiellen Hilfs-Teilnehmer (14) sendet.

9. Verfahren nach Anspruch 7 oder 8, **dadurch gekennzeichnet, dass** der sich in Bearbeitung befindliche potentielle Hilfs-Teilnehmer (14) die neue Aufgabe (20) nur dann übernimmt und/oder nur dann ein Angebot zum Ausführen der Aufgabe (20) sendet, wenn die vom Produktions-Teilnehmer (12) gesendete neue Aufgabe (20) eine höhere Priorität aufweist als die aktive vorige Aufgabe (20) und/oder wenn alle weiteren potentiellen Hilfs-Teilnehmer (14) wesentlich weniger geeignet zum Bearbeiten der Aufgabe (20) sind.

10. Verfahren nach einem der vorhergehenden Ansprüche, **dadurch gekennzeichnet, dass** die Aufgabe (20) Informationen über notwendige Fertigkeiten, Wichtungen und/oder Gewichtungen der Fertigkeiten des Teilnehmers (6) sowie Informationen über Einflussfaktoren und/oder Betriebsstrategieoptionen umfasst und/oder dass der Teilnehmer (6) ein Auswerten der Aufgabe (20) und eine Analyse, Identifizierung und/oder Interpretation der zur Lösung der Aufgabe (20) notwendigen Fertigkeiten durchführt.

11. Verfahren nach einem der vorhergehenden Ansprüche, **dadurch gekennzeichnet, dass** die Aufgabe (20) ein Bearbeiten, einen Transport, ein Be- und Entladen oder ein Lagern von Produkten, Gütern, Teilen, Schüttgut, Werkstücken, einer Palette/Tablar, einer Vorrichtung, eines Greifers und/oder Werkzeugs umfasst.

12. Verfahren nach einem der vorhergehenden Ansprüche, **dadurch gekennzeichnet, dass** mindestens einer der mindestens drei Teilnehmer (6) jeweils ein maschinenerfassbares und/oder anwendererfassbares Informationselement umfassen.

13. Produktionsanlage (2) zum Herstellen, Fertigen und/oder Montieren von Produkten und/oder Gütern, die in einem Produktionsumfeld (4) mindestens drei Teilnehmer (6) umfasst, wobei jeder Teilnehmer (6) eine Recheneinheit (8), in der durch den jeweiligen Teilnehmer (6) ein Fertigkeitsspektrum erfassbar ist, und wobei jeder Teilnehmer (6) eine Sende- und Empfangseinheit (10) zum Senden und Empfangen elektromagnetischer Wellen umfasst, die nach einem Verfahren der Ansprüche 1 bis 12 betreibbar ist.

## Claims

1. Method for decentralised operation of a production plant (2) for producing, manufacturing and/or assembling products and/or goods, which comprises at least three participants (6) in a production environment (4), wherein each participant (6) comprises a computing unit (8), in which a skill spectrum can be detected by the respective participant (6), and wherein each participant (6) comprises a transmitting and receiving unit (10) for transmitting and receiving electromagnetic waves, with the following steps:
a. Acceptance of a production order (16) comprising at least one task (20) from a production system (18) of the production plant (2) by a participant (6) who forms a production participant (12);
b. Identification by the production participant (12) of a task (20) of the at least one task (20) that lies outside the skill spectrum and transmission of the identified task (20) to the production environment (4); **characterised by**
c. Receipt of the transmitted task (20) by at least one further participant (6) in the production environment (4) and checking by the further participant (6) whether the performance of the task (20) is within the skill spectrum of the further participant (6);
d. Transmission of an offer to perform the task (20) by at least one auxiliary participant (22) into the production environment (4), which is formed by one of the further participants (6), in which the performance of the task (20) is within the skill spectrum of the participant (6); and which takes over the task sent by a production participant (12) to the production environment (4) and assists the production participant (12); and
e. Determining the auxiliary participant (22) whose skill spectrum is most suitable for performing the task (20) and performance of the task (20) by the determined auxiliary participant (22);
wherein the auxiliary participant (22) is determined by a decentralised bidding process, in which each participant (6) in the production environment (4), in which the performance of the task (20) lies within its production spectrum, forms a potential auxiliary participant (14), with the steps:
f. Transmission by all potential auxiliary participants (14) to the production environment (4) of a respective offer to perform the task (20), comprising information on relevant skills of the skill spectrum for performing the task (20);
g. Receipt of all offers by each potential auxiliary participant (14) in the production environment (4) and comparison of the received offers with the own offer by the potential auxiliary participants (14), if at least two participants (6) each form a potential auxiliary participant (14), with the following additional influence factors and/or operating strategy options:
i. Detecting alternative solutions for performing the task (20) in the offers of the further potential auxiliary participants (14);
ii. Evaluation of the alternative solutions; and
iii. Identification and selection of the most suitable alternative solution;
h. Withdrawal of the own offer by the potential auxiliary participants (14) whose own offer is less suitable than the received offer of at least one further potential auxiliary participant (14), if at least two participants (6) each form a potential auxiliary participant (14), wherein the potential auxiliary participant (14) with the most suitable offer forms the auxiliary participant (22); and
i. Transmission of the offer of the only auxiliary participant (22) at least to the production participant (12), if only one participant (6) forms an auxiliary participant (22), wherein the only potential auxiliary participant (14) forms the auxiliary participant (22), or transmission of the offer of the remaining auxiliary participant (22) to the production participant (12) if at least two participants (6) each form a potential auxiliary participant (14).

2. Method for decentralised operation of a production plant (2) for producing, manufacturing and/or assembling products and/or goods, which comprises at least three participants (6) in a production environment (4), wherein each participant (6) comprises a computing unit (8), in which a skill spectrum can be detected by the respective participant (6), and wherein each participant (6) comprises a transmitting and receiving unit (10) for transmitting and receiving electromagnetic waves, with the following steps:
a. Acceptance of a production order (16) comprising at least one task (20) from a production system (18) of the production plant (2) by a participant (6) who forms a production participant (12);
b. Identification by the production participant (12) of a task (20) of the at least one task (20) that lies outside the skill spectrum and transmission of the identified task (20) to the production environment (4); **characterised by**
c. Receipt of the transmitted task (20) by at least one further participant (6) in the production environment (4) and checking by the further participant (6) whether the performance of the task (20) is within the skill spectrum of the further participant (6);
d. Transmission of an offer to perform the task (20) by at least one auxiliary participant (22) into the production environment (4), which is formed by one of the further participants (6), in which the performance of the task (20) is within the skill spectrum of the participant (6); and which takes over the task sent by a production participant (12) to the production environment (4) and assists the production participant (12); and
e. Determining the auxiliary participant (22) whose skill spectrum is most suitable for performing the task (20) and performance of the task (20) by the determined auxiliary participant (22);
wherein the auxiliary participant (22) is determined by a decentralised bidding process, in which each participant (6) in the production environment (4), in which the performance of the task (20) lies within its production spectrum, forms a potential auxiliary participant (14), with the steps:
f. Transmission by all potential auxiliary participants (14) to the production environment (4) of an offer to perform the task (20), comprising information on relevant skills of the skill spectrum for performing the task (20);
g. Receipt of the offer of the only or all potential auxiliary participants (14) by the production participant (12) and/or by the higher-level production system (18) and, if necessary, comparison of the offers of the potential auxiliary participants (14) if at least two participants (6) each form a potential auxiliary participant (14) with the following additional influence factors and/or operating strategy options:
i. Detecting alternative solutions for performing the task (20) in the offers of the further potential auxiliary participants (14);
ii. Evaluation of the alternative solutions; and
iii. Identification and selection of the most suitable alternative solution;
h. Determination of the auxiliary participant (22) formed by the potential auxiliary participant (14) whose offer to perform the task (20) is most suitable by the production participant (12) and/or by the higher-level production system (18); and
i. Transmission of the offer from the determined auxiliary participant (22) to at least the production participant (12) that is most suitable for performing the task (20) and withdrawal of offers from the further potential auxiliary participants (14).

3. Method according to one of the preceding claims, **characterised in that** at least one task (20) of the production order (16) is defined and specified by the production system (18) of the production plant (2) and/or **in that** the production participant (12) carries out an analysis of the production order (16) and independently defines at least one of the at least one task (20) for fulfilling the production order (16) on the basis of the analysis.

4. Method according to one of the preceding claims, **characterised in that** the skills of the skill spectrum comprise the possibility of movement, speed, energy and/or fuel reserve, gripping ability, storage ability, loading options of the participant (6) with tools, order and/or work status, processing options of products and/or goods, load capacity and/or free loading capacities and/or free loading volume, environment information, distance to the production participant (12) and possibility of parallel processing.

5. Method according to one of the preceding claims, **characterised in that** the comparison of the offer with the own offer by the respective potential auxiliary participant (14) additionally comprises one or more weightings of the individual skills of the participants (6) stored in the computing unit (8).

6. Method according to one of the preceding claims, **characterised in that** at least one auxiliary participant (22) comprises a robot, a storage system or a transport system such as an autonomous guided vehicle (AGV), and/or in that at least one production participant (12) comprises a processing machine or an assembly station.

7. Method according to one of the preceding claims, **characterised in that** the potential auxiliary participant (14) transmitting an offer to perform the task (20) is free of orders or **in that** the potential auxiliary participant (14) transmitting an offer to perform the task (20) is in the midst of processing a task (20) that has already been accepted.

8. Method according to claim 7, **characterised in that**, when the new task (20) is accepted, the potential auxiliary participant (14) currently processing pauses the active processing of the already accepted previous task (20) when the new task (20) is assigned until the processing of the new task (20) is completed, or transmits the previous task (20) to the production environment (4) for acceptance by a further potential auxiliary participant (14).

9. Method according to Claim 7 or 8, **characterised in that** the potential auxiliary participant (14) currently processing only accepts the new task (20) and/or only transmits an offer to perform the task (20) if the new task (20) transmitted by the production participant (12) has a higher priority than the active previous task (20) and/or if all other potential auxiliary participants (14) are significantly less suitable for processing the task (20).

10. Method according to one of the preceding claims, **characterised in that** the task (20) comprises information about necessary skills, one or more weightings of the participant's (6) skills, as well as information about influencing factors and/or operating strategy options and/or **in that** the participant (6) performs an evaluation of the task (20) and an analysis, identification and/or interpretation of the skills necessary for solving the task (20).

11. Method according to one of the preceding claims, **characterised in that** the task (20) comprises processing, transporting, loading and unloading or storing products, goods, parts, bulk material, workpieces, a pallet/tray, a device, a gripper and/or a tool.

12. Method according to one of the preceding claims, **characterised in that** at least one of the at least three participants (6) each comprise a machine-detectable and/or user-detectable information element.

13. Production plant (2) for producing, manufacturing and/or assembling products and/or goods, which comprises at least three participants (6) in a production environment (4), wherein each participant (6) comprises a computing unit (8), in which a skill spectrum can be detected by the respective participant (6), and wherein each participant (6) comprises a transmitting and receiving unit (10) for transmitting and receiving electromagnetic waves, which can be operated according to a method of claims 1 to 12.

## Revendications

1. Procédé d'exploitation décentralisée d'une unité de production (2) pour la fabrication, la production et/ou l'assemblage de produits et/ou de marchandises, comprenant au moins trois participants (6) dans un environnement de production (4), chaque participant (6) disposant d'une unité de calcul (8) dans laquelle un spectre de compétences peut être enregistré par le participant (6) respectif, chaque participant (6) disposant d'une unité d'émission et de réception (10) pour l'émission et la réception d'ondes électromagnétiques, comprenant les étapes suivantes :
a. Validation d'un ordre de production (16) comprenant au moins une tâche (20) d'un système de production (18) de l'unité de production (2) par un participant (6) qui forme un participant à la production (12) ;
b. Identification d'une tâche (20) en dehors du spectre de compétences d'au moins une tâche (20) par le participant à la production (12) et envoi de la tâche (20) identifiée à l'environnement de production (4) ; **caractérisée par**
c. la réception de la tâche envoyée (20) par au moins un autre participant (6) dans l'environnement de production (4) et la vérification par l'autre participant (6) si l'exécution de la tâche (20) se situe dans le spectre de compétences de l'autre participant (6) ;
d. Envoyer une offre d'exécution de la tâche (20) par au moins un participant auxiliaire (22) dans l'environnement de production (4), formé par l'un des autres participants (6), pour lequel l'exécution de la tâche (20) relève du spectre de compétences du participant (6) et qui prend en charge la tâche envoyée dans l'environnement de production (4) d'un participant à la production (12) et assiste le participant de production (12) ; et
e. déterminer le participant auxiliaire (22) dont le spectre de compétences est le plus approprié pour exécuter la tâche (20) et faire exécuter la tâche (20) par le participant auxiliaire (22) déterminé ;
le participant auxiliaire (22) étant déterminé par un processus d'appel d'offres décentralisé dans lequel chaque participant (6) de l'environnement de production (4), où l'exécution de la tâche (20) se situe dans sa zone de fabrication, forme un participant auxiliaire potentiel (14), avec les étapes suivantes :
f. Envoi par chaque participant auxiliaire potentiel (14) d'une offre de validation de la tâche (20), y compris des informations sur la manière d'effectuer la tâche (20) et les compétences pertinentes du spectre de compétences, à l'environnement de production (4) ;
g. Réception de toutes les offres par chaque participant auxiliaire potentiel (14) dans l'environnement de production (4) et comparaison des offres reçues avec leur propre offre par les participants auxiliaires potentiels (14), si au moins deux participants (6) forment chacun un participant auxiliaire potentiel (14), avec les facteurs d'influence supplémentaires et/ou options de stratégie opérationnelle suivantes :
i. Identification des solutions alternatives pour exécuter la tâche (20) dans les offres des autres participants auxiliaires potentiels (14) ;
ii. Évaluation des solutions alternatives ; et
iii. identification et sélection de la solution alternative la plus appropriée ;
h. Retrait de leur propre offre par les participant auxiliaires potentiels (14) dont l'offre est moins appropriée que l'offre reçue d'au moins un autre participant auxiliaire potentiel (14), si au moins deux participants (6) constituent chacun un participant auxiliaire potentiel (14), le participant auxiliaire potentiel (14) ayant l'offre la plus appropriée constituant le participant auxiliaire (22) ; et
i. Envoi de l'offre du seul participant auxiliaire (22) au moins au participant à la production (12), si un seul participant (6) constitue un participant auxiliaire (22), le seul participant auxiliaire potentiel (14) constituant le participant auxiliaire (22), ou envoi de l'offre du participant auxiliaire restant (22) au participant à la production (12), si au moins deux participants (6) constituent chacun un participant auxiliaire potentiel (14).

2. Procédé d'exploitation décentralisée d'une unité de production (2) pour la fabrication, la production et/ou l'assemblage de produits et/ou de marchandises, comprenant au moins trois participants (6) dans un environnement de production (4), chaque participant (6) disposant d'une unité de calcul (8) dans laquelle un spectre de compétences peut être enregistré par le participant (6) respectif, chaque participant (6) disposant d'une unité d'émission et de réception (10) pour l'émission et la réception d'ondes électromagnétiques, comprenant les étapes suivantes :
a. Validation d'un ordre de production (16) comprenant au moins une tâche (20) d'un système de production (18) de l'unité de production (2) par un participant (6) qui forme un participant à la production (12) ;
b. Identification d'une tâche (20) en dehors du spectre de compétences d'au moins une tâche (20) par le participant à la production (12) et envoi de la tâche (20) identifiée à l'environnement de production (4) ; **caractérisée par**
c. la réception de la tâche envoyée (20) par au moins un autre participant (6) dans l'environnement de production (4) et la vérification par l'autre participant (6) si l'exécution de la tâche (20) se situe dans le spectre de compétences de l'autre participant (6) ;
d. Envoyer une offre d'exécution de la tâche (20) par au moins un participant auxiliaire (22) dans l'environnement de production (4), formé par l'un des autres participants (6), pour lequel l'exécution de la tâche (20) relève du spectre de compétences du participant (6) et qui prend en charge la tâche envoyée dans l'environnement de production (4) d'un participant à la production (12) et assiste le participant de production (12) ; et
e. déterminer le participant auxiliaire (22) dont le spectre de compétences est le plus approprié pour exécuter la tâche (20) et faire exécuter la tâche (20) par le participant auxiliaire (22) déterminé ;
le participant auxiliaire (22) étant déterminé par un processus d'appel d'offres centralisé dans lequel chaque participant (6) de l'environnement de production (4), où l'exécution de la tâche (20) se situe dans sa zone de fabrication, constitue un participant auxiliaire potentiel (14), avec les étapes suivantes :
f. Envoi d'une offre de validation de la tâche (20), comprenant des informations sur l'exécution de la tâche (20) et les compétences pertinentes du spectre des compétences, par tous les participants auxiliaires potentiels (14) à l'environnement de production (4) ;
g. Réception de l'offre d'un ou de tous les participants auxiliaires potentiels (14) par le participant à la production (12) et/ou par le système de production (18) de niveau supérieur et, le cas échéant, comparaison des offres des participants auxiliaires potentiels (14), si au moins deux participants (6) constituent chacun un participant auxiliaire potentiel (14), avec les facteurs d'influence supplémentaires et/ou les options de stratégie opérationnelle suivantes :
i. Identification des solutions alternatives pour exécuter la tâche (20) dans les offres des autres participants auxiliaires potentiels (14) ;
ii. Évaluation des solutions alternatives ; et
iii. identification et sélection de la solution alternative la plus appropriée ;
h. Détermination du participant auxiliaire (22) formé par le participant auxiliaire potentiel (14) dont l'offre est la plus appropriée pour exécuter la tâche (20) par le participant à la production (12) et/ou par le système de production (18) de niveau supérieur ; et
i. Envoi de l'offre du participant auxiliaire (22) déterminé au moins au participant à la production (12) qui est le plus approprié pour exécuter la tâche (20) et retirer les offres des autres participants auxiliaires potentiels (14).

3. Procédé selon l'une des revendications précédentes, **caractérisé en ce qu'**au moins une tâche (20) de l'ordre de production (16) est définie et spécifiée par le système de production (18) de l'unité de production (2) et/ou que le participant à la production (12) effectue une analyse de l'ordre de production (16) et définit indépendamment au moins une des tâches (20) pour exécuter l'ordre de production (16) sur la base de cette analyse.

4. Procédé selon l'une des revendications précédentes, **caractérisé en ce que** les compétences du spectre de compétences comprennent la capacité de déplacement, la vitesse, l'énergie et/ou la réserve de carburant, la capacité de préhension, la capacité de stockage, les options d'équipement du participant (6) avec des outils, l'ordre et/ou l'état de travail, les possibilités de traitement des produits et/ou des marchandises, la capacité de charge et/ou les capacités de charge libre et/ou le volume de charge libre, les informations environnementales, la distance par rapport au participant à la production (12), la possibilité de traitement parallèle.

5. Procédé selon l'une des revendications précédentes, **caractérisé en ce que** la comparaison de l'offre avec l'offre propre du participant auxiliaire potentiel (14) comprend en outre une pondération et/ou des pondérations des compétences individuelles des participants (6) stockées dans l'unité de calcul (8).

6. Procédé selon l'une des revendications précédentes, **caractérisé en ce qu'**au moins un participant auxiliaire (22) comprend un robot, un système de stockage ou un système de transport, tel qu'un véhicule autonome (AGV), et/ou qu'au moins un participant à la production (12) comprend une machine de traitement ou un poste d'assemblage.

7. Procédé selon l'une des revendications précédentes, **caractérisé en ce que** le participant auxiliaire potentiel (14) envoyant une offre pour exécuter la tâche (20) est libre de toute obligation ou que le participant auxiliaire potentiel (14) envoyant une offre pour exécuter la tâche (20) est en train de travailler sur une tâche (20) qui a déjà été acceptée.

8. Procédé selon la revendication 7, **caractérisé en ce que** le participant auxiliaire potentiel (14) qui prend en charge actuellement la tâche (20) interrompt le traitement actif de la tâche (20) précédemment acceptée lors de l'attribution de la nouvelle tâche (20) jusqu'à ce que le traitement de la nouvelle tâche (20) soit terminé, ou envoie la tâche précédente (20) à l'environnement de production (4) pour être validée par un autre participant auxiliaire potentiel (14).

9. Procédé selon la revendication 7 ou 8, **caractérisé en ce que** le participant auxiliaire potentiel (14) en train de prendre en charge une tâche, ne prend en charge la nouvelle tâche (20) et/ou n'envoie une offre d'exécution de la tâche (20) que si la nouvelle tâche (20) envoyée par le participant à la production (12) a une priorité plus élevée que la tâche précédente active (20) et/ou si tous les autres participants auxiliaires potentiels (14) sont nettement moins adaptés au traitement de la tâche (20).

10. Procédé selon l'une des revendications précédentes, **caractérisé en ce que** la tâche (20) comprend des informations sur les compétences nécessaires, les pondérations et/ou les pondérations des compétences du participant (6) ainsi que des informations sur les facteurs d'influence et/ou les options de stratégie opérationnelle et/ou que le participant (6) effectue une évaluation de la tâche (20) et une analyse, une identification et/ou une interprétation des compétences nécessaires pour résoudre la tâche (20).

11. Procédé selon l'une des revendications précédentes, **caractérisé en ce que** la tâche (20) comprend le traitement, le transport, le chargement et le déchargement ou le stockage de produits, marchandises, pièces, marchandises en vrac, pièces à usiner, une palette/un plateau, un dispositif, une pince et/ou un outil.

12. Procédé selon l'une des revendications précédentes, **caractérisé en ce qu'**au moins un des trois participants (6) comprend chacun un élément d'information détectable par machine et/ou détectable par l'utilisateur.

13. Unité de production (2) pour la fabrication, la production et/ou l'assemblage de produits et/ou de marchandises, comprenant au moins trois participants (6) dans un environnement de production (4) chaque participant (6) comprenant une unité de calcul (8) dans laquelle un spectre de compétences peut être enregistré par le participant respectif (6), et dans lequel chaque participant (6) comprend une unité d'émission et de réception (10) pour l'émission et la réception d'ondes électromagnétiques, qui peut être exploitée selon un procédé des revendications 1 à 12.
